Europäisches Patentamt

European Patent Office

Office européen des brevets

(19)

(11) **EP 0 962 843 B1**

## (12) EUROPÄISCHE PATENTSCHRIFT

(45) Veröffentlichungstag und Bekanntmachung des Hinweises auf die Patenterteilung:
**29.01.2003 Patentblatt 2003/05**

(51) Int Cl.[7]: **G05B 19/4069**

(21) Anmeldenummer: **99108850.1**

(22) Anmeldetag: **04.05.1999**

(54) **Verfahren zur nichtlinearen Darstellung von Bahnkurven eines Werkzeugs einer numerischen Werkzeugmaschine**

Method for non-linear display of tool paths of numerically controlled machine tool

Procédé d'affichage non-linéaire de trajectoires d'outil d'une machine outil

(84) Benannte Vertragsstaaten:
**CH DE FR GB IT LI**

(30) Priorität: **14.05.1998 DE 19821557**

(43) Veröffentlichungstag der Anmeldung:
**08.12.1999 Patentblatt 1999/49**

(73) Patentinhaber: **Dr. Johannes Heidenhain GmbH 83292 Traunreut (DE)**

(72) Erfinder:
- **Kranitzky, Walter Dr.
  83278 Traunstein (DE)**
- **Brader, Anton Dipl.-Phys.
  83119 Obing (DE)**

(56) Entgegenhaltungen:
**WO-A-94/07187          WO-A-97/27521**

**Beschreibung**

Die vorliegende Erfindung betrifft ein Verfahren zur nichtlinearen Darstellung von Bahnkurven einer numerischen Werkzeugmaschine nach dem Oberbegriff des Anspruchs 1.

Aus der JP-A-07072914 ist bekannt eine Bahnkurve darzustellen, die ein Werkzeug während der Bearbeitung eines Werkstücks zurücklegt. Damit der Benutzer unmittelbar auch die Vorschubgeschwindigkeit des Werkzeugs erkennen kann, wird die Art, Farbe und Breite der Linie, mit der die Bahnkurve dargestellt wird abhängig von der Vorschubgeschwindigkeit verändert. Weiterhin werden Stellen der Bahnkurve gekennzeichnet, an denen die Vorschubgeschwindigkeit des Werkzeugs einen Grenzwert über- bzw. unterschreitet.

Hierbei ist von Nachteil, daß eine grafische Darstellung der Abweichung zwischen Sollbahn und Istbahn nicht vorgesehen ist.

Aus der JP-A-58-158 713 ist bekannt bei einer numerischen Fertigungseinrichtung mit einer Anzeigeeinrichtung automatisch einen Maßstab und eine Position zu berechnen, so daß die auf der Anzeigeeinrichtung dargestellten Fertigungsinformationen die gesamte verfügbare Anzeigefläche der Anzeigeeinheit einnehmen. Dabei können die Fertigungsinformationen die Bahnkurve des Werkzeugs und das erzeugte Profil des Werkstücks beinhalten.

Dabei ist nicht vorgesehen dem Benutzer einen Vergleich zwischen der Bahnkurve des Werkzeugs und dem erzeugten Profil des Werkstücks zu ermöglichen. Dadurch sind Abweichungen zwischen den beiden Kurven für den Benutzer nicht unmittelbar zu erkennen.

Aus der EP 513 369 B1 ist bekannt, bei einer Anzeigeeinheit einer numerischen Steuerungseinrichtung immer sowohl das Werkstück als auch das Werkzeug anzuzeigen. Damit die Anzeigefläche der Anzeigeeinheit immer optimal genutzt wird, wird bei einer Veränderung des Abstandes zwischen Werkzeug und Werkstück der Maßstab neu berechnet. Dadurch wird sichergestellt, daß Werkzeug und Werkstück immer mit einem Maßstab dargestellt werden, der möglichst viele Details erkennen läßt.

Auch hier ist keine Anzeige von Soll- und Istbahn vorgesehen. Ein weiterer Nachteil ist, daß bei einem großen Abstand zwischen Werkzeug und Werkstück insbesondere das Werkstück sehr klein dargestellt wird und dadurch das unmittelbare Erkennen einer fehlerhaften Bahnkurve praktisch unmöglich ist.

Aus der EP 510 204 A1 ist ein Verfahren zur Bestimmung der Genauigkeit einer numerischen Fertigungseinrichtung bekannt. Dabei wird eine numerische Steuerungsanweisung einer Werkzeugmaschine, welche eine Steuerung aufweist, zugeleitet. Nach Ausführung der Steuerungsanweisung wird die Bahn des Werkzeugs von der Werkzeugmaschine an die Steuerung gemeldet und eine Abweichung zwischen der zurückgemeldeten Bahn des Werkzeugs und der durch den numerischen Steuerbefehl angegebenen Bahn ermittelt und so die Genauigkeit bestimmt. Zur Auswertung durch den Benutzer der numerischen Steuerung wird sowohl die Sollkurve, die durch die numerische Steueranweisung festgelegt wird, als auch die an die Steuerung zurückgemeldete Werkzeugbahn auf einer Anzeigeeinrichtung grafisch dargestellt. Der Benutzer hat dabei die Möglichkeit die Maßstäbe der Darstellung in x- und y-Richtung abhängig von den angezeigten Abweichungen der beiden Kurven anzupassen.

Diese Realisierung weist den Nachteil auf, daß der Maßstab nur für die gesamte Anzeigeeinheit verändert werden kann und nicht für ausgewählt Bereiche der grafischen Darstellung, so daß bei Wahl einer Vergrößerung, die Abweichungen zwischen Soll- und Istbahn erkennen läßt nicht mehr das ganze Werkstück angezeigt werden kann.

Aus der WO 94/07187 ist ein Verfahren zur Überprüfung der Arbeitsgenauigkeit einer NC-Maschine bekannt. Die NC-Maschine weist dabei mindestens zwei Achsen mit jeweils einem Achsantrieb auf, die durch Servoregelkreise gesteuert werden. Weiterhin ist ein Wegmeßsystem für jede Achse vorgesehen. Bei dem Verfahren wird eine kreisförmige Sollbahn von der NC-Maschine abgearbeitet und die aufgrund der Maschinenbewegung resultierende tatsächliche Ist-Kreisbahn mit der Sollbahn verglichen. Für den Benutzer wird sowohl die kreisförmige Sollbahn als auch die gemessene Ist-Kreisbahn auf einer Anzeigeeinheit grafisch zum Vergleich dargestellt.

Dabei ist von Nachteil, daß die Abweichungen von Sollbahn und Istbahn des Kreises bei heutigen NC-Maschinen so gering sind, daß die Abweichungen bei Darstellung des gesamten Kreises auf der Anzeigeeinheit meist nicht mehr zu erkennen sind. Bei einer vergrößerten Darstellung von nur einem Kreisausschnitt kann der Benutzer nicht sofort erkennen, an welcher Stelle der Kreisbahn die größten Fehler auftreten. Weiterhin ist bei einer komplizierteren Bahnkurve als einem Kreis für den Benutzer nicht mehr eindeutig klar welcher Teil der Bahnkurve gerade dargestellt wird.

Auch aus der WO 97/27521 ist die Bestimmung und Optimierung der Arbeitsgenauigkeit einer Werkzeugmaschine oder eines Roboters bekannt. Es wird der Verlauf der Sollbahn, welcher aufgrund des in der numerischen Steuerung vorhandenen Teilprogramms bekannt ist mit der tatsächlichen Istbahn verglichen. Zur Ermittlung der Istbahn werden die bei einer Werkzeugmaschine ohnehin vorhandenen Lagemeßsysteme mindestens zweier Achsen benutzt. Zur Darstellung einer Konturabweichung wird der geometrische Bezug zwischen Soll- und Istbahn ausgewertet. Der Unterschied des Betrags von Sollwertvektor und zugehörigem Istwertvektor wird in Normalenrichtung zum Sollwertverlauf dargestellt.

Dabei ergibt sich auch hier das Problem, daß der gesamte Bahnverlauf nicht mehr auf der Anzeigeeinheit dargestellt werden kann, wenn der Benutzer eine Ausschnittvergrößerung auswählt, um die Abweichung zwischen Soll und Istbahn erkennen zu können. Dadurch verliert der Benutzer schnell den Überblick über das zu fertigende Werkstück.

Aufgabe der vorliegenden Erfindung ist es daher, eine Darstellungsform anzugeben, bei der sowohl die gesamte Bahnkurve auf der zur Verfügung stehenden Anzeigefläche dargestellt werden kann als auch Abweichungen zwischen Soll- und Istbahn vom Benutzer noch qualitativ abgeschätzt werden können.

Diese Aufgabe wird durch ein Verfahren mit den in Anspruch 1 angegebenen Merkmalen gelöst.

Vorteilhafte Ausgestaltungen sind den abhängigen Ansprüchen zu entnehmen.

Das erfindungsgemäße Verfahren weist den Vorteil auf, daß die Abschnitte der Bahnkurve, in denen keine große Abweichung zwischen Sollbahn und Istbahn erwartet wird oder vorhanden ist in einem verkleinernden Maßstab dargestellt werden und die Abschnitte der Bahnkurve, in denen große Abweichungen zwischen Soll- und Istbahn erwartet werden oder vorhanden sind in einem vergrößernden Maßstab dargestellt werden. Durch diesen Wechsel des Maßstabs in einer einzigen Darstellung können die für den Benutzer interessanten Abschnitte der Bahnkurve detailliert dargestellt werden, ohne daß der Benutzer den Überblick über die gesamte Bahnkurve verliert.

Die vorliegende Erfindung ermöglicht also eine benutzerfreundliche Anzeige der Ist- und Sollbahn. Damit sich der Benutzer schnell orientieren kann, besteht zusätzlich zur vergrößerten Anzeige von Ausschnitten der Bahnkurve auch die Möglichkeit die gesamte Bahnkurve in einem Fenster der Anzeigeeinheit anzuzeigen. Um trotz Anzeige der gesamten Bahn auch kleine Abweichungen zwischen Soll- und Istbahn detailliert darstellen zu können, wird durch Veränderung des Maßstabs an kritischen Stellen, wie z.B. Ecken der bearbeiteten Sollbahn oder an Stellen, an denen eine große Abweichung der Istbahn von der Sollbahn auftritt, die Istbahn und die Sollbahn vergrößert angezeigt.

Als weitere Information kann dem Benutzer die Vorschubgeschwindigkeit derart angezeigt werden, daß die Kurve für die Sollvorschubgeschwindigkeit identisch ist mit der Sollbahn und die Istvorschubgeschwindigkeit entweder absolut über der Sollvorschubgeschwindigkeit oder relativ in Prozent bezogen auf die Sollvorschubgeschwindigkeit ebenfalls über der Sollvorschubgeschwindigkeit dargestellt wird. Dadurch ist unmittelbar klar, an welcher Stelle der Sollbahn eine Abweichung der Vorschubgeschwindigkeit vom Sollwert aufgetreten ist.

Die Erfindung wird im folgenden anhand der in der Zeichnung dargestellten Ausführungsformen näher erläutert. Es zeigt:

Fig. 1: die erfindungsgemäße Darstellung für einen möglichen Verlauf von Soll- und Istbahn und

Fig. 2: eine mögliche Aufteilung von Soll- und Istbahn in verschiedene Abschnitte.

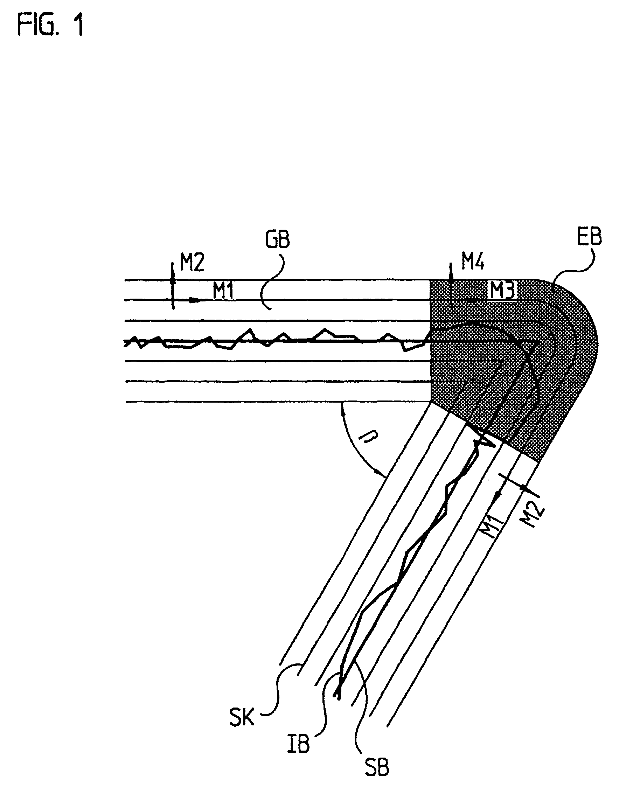

In Fig. 1 ist eine mögliche erfindungsgemäße grafische Darstellung des Verlaufs von Sollbahn SB und Istbahn IB eines Werkzeugs dargestellt. Im einzelnen ist die als gerade Linie mit einer Ecke ausgebildete Sollbahn SB zu sehen, von der die Istbahn IB mehr oder weniger stark abweicht.

Im Bereich eines geraden Verlaufs GB der Sollbahn SB unterscheidet sich der Maßstab M1, mit dem die Sollbahn SB und die zur Sollbahn SB parallele Komponente der Istbahn IB dargestellt wird, von dem Maßstab M2, mit dem die Abweichung zwischen Istbahn IB und Sollbahn SB dargestellt wird derart, daß die Abweichungen der Istbahn IB von der Sollbahn SB vergrößert dargestellt werden. Dies wird dadurch erreicht, daß der Maßstab M2, mit dem die Abweichung zwischen Sollbahn SB und Istbahn IB dargestellt wird, vergrößernd gewählt wird im Vergleich zum Maßstab M1. Dadurch werden bereits geringe Abweichungen der Istbahn IB von der Sollbahn SB für den Benutzer erkennbar, ohne daß die gesamte grafische Darstellung zu stark vergrößert wird.

Zusätzlich wird parallel zur Sollbahn SB eine Skala SK dargestellt, die dem Benutzer eine qualitative Abschätzung der Differenz zwischen Sollbahn SB und Istbahn IB erleichtert. Die einzelnen Skalenstriche der Skala SK sind mit verminderter Linienbreite dargestellt, so daß Sollbahn SB und Istbahn IB hervorgehoben und vom Benutzer eindeutig von der Skala SK unterschieden werden können.

Weiterhin wird ein Bereich um die Ecken EB der Sollbahn SB hervorgehoben dargestellt, wobei diese Hervorhebung einen unterschiedlichen Maßstab M3 kennzeichnet, mit dem die Sollbahn SB und die Komponente der Istbahn IB parallel zur Sollbahn SB dargestellt werden. Die Komponente der Istbahn IB senkrecht zur Sollbahn SB wird im Bereich um eine Ecke EB der Sollbahn SB mit einem anderen Maßstab M4 dargestellt, da an Ecken der Sollbahn SB üblicherweise größere Abweichungen zwischen Sollbahn SB und Istbahn IB auftreten.

Vorteilhaft wird im Bereich einer Ecke EB als neuer Maßstab M3 für die Sollbahn SB und die Komponente der Istbahn IB parallel zur Sollbahn SB der gleiche Maßstab M4 gewählt, mit dem bereits die Abweichungen der Istbahn IB von der Sollbahn SB dargestellt wird. Dadurch wird die Sollbahn SB und die Istbahn IB im Bereich einer Ecke EB mit gleichem Maßstab dargestellt, was die Ablesung für den Benutzer vereinfacht.

Um Verzerrungen an den Grenzen zwischen geraden Bereichen GB und Bereichen um Ecken EB zu vermeiden wird ein Hilfspunkt für die Istbahn bestimmt, wenn ein Punkt der Istbahn IB in einem geraden Bereich GB und ein darauf folgender Punkt der Istbahn IB im Eckenbereich EB liegt oder umgekehrt. Die grafische Darstellung des Stücks der Istbahn IB im geraden Bereich GB bis zum Hilfspunkt erfolgt mit dem Maßstab M1 und M2 für den geraden Bereich GB und die grafische Darstellung des Stücks der Istbahn IB im Eckenbereich EB erfolgt dann mit dem Maßstab M3 und M4 für den Eckenbereich EB.

Zur weiteren Vereinfachung für den Benutzer kann der im Bereich einer Ecke EB gewählte Maßstab M3 (= Maßstab M4) auch als Maßstab M2 für die Abweichung der Istbahn IB von der Sollbahn SB in einem geraden Bereich GB gewählt werden. Durch die Wahl dieser Maßstäbe M1 ≠ M2 = M3 = M4 wird dann lediglich die Sollbahn SB und die zu ihr parallele Komponente der Istbahn IB, welche beide nicht im Bereich einer Ecke EB liegen, mit einem anderen Maßstab M1 dargestellt. Dies wirkt auf den Benutzer wie eine Verkürzung der geraden Bereiche GB.

Die grafische Darstellung der gesamten Sollbahn SB und Istbahn IB erfolgt in einem vom Benutzer insbesondere hinsichtlich der Größe definierten Fenster. Um dieses Fenster optimal auszufüllen wird die Fensterbreite in einer ersten Richtung zur Breite der grafischen Darstellung in dieser Richtung ins Verhältnis gesetzt und die Fensterbreite in einer zweiten, zur ersten orthogonalen Richtung zur Breite der grafischen Darstellung in dieser Richtung ebenfalls ins Verhältnis gesetzt. Um die grafische Darstellung in beiden Richtungen auf die Fenstergröße zu skalieren wird das Verhältnis ausgewählt, das die grafische Darstellung am meisten verkleinert. Dadurch wird sichergestellt, daß die grafische Darstellung der gesamten Sollbahn SB und Istbahn IB im dafür vorgesehenen Fenster angezeigt werden kann.

Bei der Durchführung des Verfahrens werden vom Benutzer verschiedene Eingaben abgefragt. Es sind die Anzahl und die Breite pro Skalenstrich der Skala SK, z.B. 5 µm, der parallel zur Sollbahn SB darzustellenden Skalenstriche einzugeben. Weiterhin muß der Benutzer das gewünschte Sollbahn-Fehlerschlauch-Verhältnis eingeben, das die maximale Erstreckung der Sollbahn SB zur gesamten Breite aller Skalenstriche der Skala SK, die den Fehlerschlauch um die Sollbahn SB herum bilden, angibt. Anschließend ist vom Benutzer einzugeben, wie groß der Bereich um eine Ecke EB sein soll, der mit einem anderen Maßstab M3 und M4 dargestellt werden soll. An dieser Stelle kann eine normierte Eingabe erfolgen, indem vom Benutzer nur Vielfache der Breite des Fehlerschlauchs eingegeben werden. Es wird dann von der Ecke der Sollbahn SB ab gemessen parallel und antiparallel zur Sollbahn SB gemäß der Eingabe die Sollbahn SB und die Istbahn IB auf der eingegebenen Länge, z.B. die einfache Breite des Fehlerschlauchs, die doppelte Breite des Fehlerschlauchs usw., mit den Maßstäben M3 und M4 dargestellt. Abschließend wird die Größe des für die Darstellung verwendeten Fensters vom Benutzer eingegeben.

Danach wir die Sollbahn SB und die Istbahn IB ermittelt. Die Sollbahn SB wird aus den in einem Speicher gespeicherten Befehlen für eine numerische Steuerung ermittelt.

Die Istbahn IB wird ermittelt, indem die gespeicherten Befehle durch eine numerische Steuerung auf einer Werkzeugmaschine abgearbeitet werden und die daraus resultierenden Verfahrbewegungen mittels vorhandener oder zusätzlicher Meßsysteme durch die numerische Steuerung gemessen werden. Diese Meßwerte werden als Istbahn IB benutzt. Nachdem Sollbahn SB und Istbahn IB in einem Speicher abgespeichert wurden, werden die beiden maximalen Erstreckungen der Sollbahn SB in den beiden darzustellenden Dimensionen ermittelt.

Im Anschluß daran wird die Vergrößerung der Komponente der Istbahn IB senkrecht zur Sollbahn SB berechnet. Um die Istbahn IB in eine Komponente parallel zur Sollbahn SB und eine Komponente senkrecht zur Sollbahn SB aufzuspalten, werden an den mittels der Meßsysteme ermittelten Punkten der Istbahn IB das Lot auf die Sollbahn SB bestimmt. Das Lot ist die zur Sollbahn SB senkrechte Abweichung zwischen den Punkten der Istbahn IB und der Sollbahn SB und wird für die grafische Darstellung entsprechend vergrößert. Zur Berechnung der Vergrößerung der Istbahn IB senkrecht zur Sollbahn SB wird die maximale Erstreckung der Sollbahn SB, die in einer ersten Richtung, x-Richtung, oder in einer zweiten, dazu senkrechten Richtung, y-Richtung, vorliegen kann, durch das Sollbahn-Fehlerschlauch-Verhältnis, die Anzahl Skalenstriche der Skala SK und die Breite zwischen zwei Skalenstrichen dividiert.

Alternativ kann die Vergrößerung der Istbahn IB senkrecht zur Sollbahn SB auch direkt vom Benutzer eingegeben werden, ohne eine Berechnung durchzuführen.

Diese Vergrößerung wird als Maßstab M2 für Komponenten der Istbahn IB senkrecht zur Sollbahn SB in einem geraden Bereich GB sowie als Maßstäbe M3 und M4 für Istbahn IB und Sollbahn SB in den Ecken EB benutzt.

Danach wird die Gesamterstreckung der gesamten grafischen Darstellung unter Berücksichtigung der vergrößert dargestellten Bereiche an den Ecken EB und der Breite des Fehlerschlauchs bestimmt. Diese Gesamterstreckung kann dabei in einer ersten Richtung, x-Richtung, oder einer dazu senkrechten zweiten Richtung, y-Richtung, vorliegen.

Schließlich wird aufgrund der Abmessungen des für die grafische Darstellung zur Verfügung stehenden Fensters und der ermittelten Gesamterstreckung der grafischen Darstellung der Maßstab M1 zur Darstellung der Sollbahn SB und der zur Sollbahn SB parallelen Komponente der Istbahn IB in geraden Bereichen GB berechnet. Dadurch wird die gesamte grafische Darstellung in das zur Verfügung stehende Fenster eingepaßt.

Weiterhin kann vom Benutzer ein Grenzwinkel β eingegeben werden. Weist eine Ecke einen kleineren als den Grenzwinkel β auf, so wird dieser Bereich einer Ecke EB nicht mit anderen Maßstäben M3 und M4 dargestellt, sondern mit den für einen geraden Bereich GB benutzten Maßstäben M1 und M2. Diese vorteilhaft Ausgestaltung ist in der Praxis erforderlich, da bei kleinen Grenzwinkeln β ein zu großer Bereich um eine Ecke EB entstehen würde.

Zusätzlich besteht die Möglichkeit auch den Soll- und Istverlauf der Vorschubgeschwindigkeit der Antriebe ebenso wie die Sollbahn SB und die Istbahn IB grafisch in Abhängigkeit von der Sollbahn SB anzuzeigen. Dafür wird der Sollvorschub durch einen grafischen Verlauf, der nicht absolut, sondern identisch mit der Sollbahn SB dargestellt wird, angezeigt. Zusätzlich wird unter Berücksichtigung der auftretenden Abweichungen der tatsächliche Istvorschub dargestellt. Dieser wird durch Differenzierung bzw. Differenzenbildung der für die Istbahn IB ohnehin erforderlichen Positionswerte errechnet.

In einer alternativen Ausführungsform werden vom Benutzer zunächst die Abmessungen des Fensters für die grafische Darstellung der Sollbahn SB und der Istbahn IB eingegeben. Anschließend wird vom Benutzer die Vergrößerung für die Abweichungen zwischen Sollbahn SB und Istbahn IB in der Form 5 mm pro 5 µm eingegeben. Das heißt, daß für eine Abweichung der Istbahn IB von 5 µm von der Sollbahn SB am Werkstück auf der Anzeige 5 mm beansprucht werden. Das bedeutet damit einen Maßstab M2 = M3 = M4 = 1000:1. Durch diese Eingabe wird gleichzeitig festgelegt, daß jeweils in 5 mm Abstand von der Sollbahn auf der Anzeigeeinheit ein Skalenstrich der Skala SK gezeichnet werden soll. Sollen die Skalenstriche bei gleichem Maßstab nur 2 mm Abstand aufweisen, ist 2 mm pro 2 µm vom Benutzer einzugeben. Die Anzahl der Skalenstriche wird automatisch aufgrund der noch zu bestimmenden maximalen Abweichung zwischen Istbahn IB und Sollbahn SB berechnet. Danach muß der Benutzer eingeben, wie groß der Bereich um eine Ecke EB sein soll, der mit einem anderen Maßstab dargestellt werden soll.

Anschließend wird die Sollbahn SB und Istbahn IB ermittelt. Wie dies bereits beschrieben wurde, erfolgt die Ermittlung der Sollbahn SB aufgrund der gespeicherten Befehle für die numerische Steuerung. Die Istbahn IB wird durch Messung der tatsächlich durch die Werkzeugmaschine aufgrund der Befehle durchgeführten Bewegungen mittels an der Werkzeugmaschine entweder ohnehin vorhandener oder spezieller Meßsysteme ermittelt. Anschließend wird die Abweichung zwischen Sollbahn SB und Istbahn IB sowie mindestens ein Maximum dieser Abweichung berechnet. Dieses Maximum der Abweichung zwischen Sollbahn SB und Istbahn IB wird dazu benutzt, die Breite des Fehlerschlauchs und damit den Maßstab für die Bereiche an den Ecken EB der Sollbahn SB und für die zur Sollbahn SB senkrechte Komponente der Istbahn IB zu berechnen. Dabei wird vorteilhaft die doppelte maximale Abweichung als gesamte Breite für den Fehlerschlauch benutzt. Da die Breite einer Skalenstriche SK vom Benutzer bereits eingegeben wurde, wird dadurch gleichzeitig der Maßstab für die zur Sollbahn SB senkrechte Komponente der Istbahn IB definiert.

Anschließend wird auf Basis der für beide darzustellenden Dimensionen zur Verfügung stehenden Abmessungen des Fensters der Maßstab M1 für die geraden Bereiche GB der Sollbahn SB berechnet. Es wird das Verhältnis Vx und Vy berechnet aus der Differenz der Abmessungen des Fensters Xf, Yf abzüglich der durch Ecken bereits benötigten Abmessungen Xe, Ye zu den Längen von geraden Abschnitten GB der Sollbahn Xg, Yg für beide darzustellenden Dimensionen.

$$V_x = \frac{Xf - Xe}{Xg} \quad \text{bzw.} \quad V_y = \frac{Yf - Ye}{Yg}$$

Das Verhältnis, welches eine kleinere Darstellung realisiert, wird dann als Maßstab für die geraden Bereiche GB der Sollbahn SB und als Maßstab für die zur Sollbahn SB parallelen Komponenten der Istbahn IB in beiden Dimensionen x und y benutzt.

Dabei kann der Fall eintreten, daß der Benutzer derart kleine Abmessungen für das Fenster, in dem Sollbahn SB und Istbahn IB dargestellt werden sollen, eingegeben hat, daß bereits die vergrößerten Bereiche diese Abmessungen überschreiten. Dies ist dann der Fall, wenn Vx oder Vy negativ wird. Dann wird eine Fehlermeldung mit dem Hinweis ausgegeben, daß entweder die Abmessungen für das Fenster vergrößert oder die vergrößert darzustellenden Bereiche der Bahnkurven vom Benutzer verkleinert werden müssen.

Diese Alternative weist den Vorteil auf, daß dem Benutzer möglichst viel Arbeit abgenommen und somit die Fehleranfälligkeit reduziert wird. Aufgrund der automatischen Maßstabsberechnung, die durch die maximale Abweichung zwischen Sollbahn SB und Istbahn IB sowie durch die Größe der Bereiche der Ecken EB festgelegt wird und der Notwendigkeit die grafische Darstellung in den vom Benutzer eingegebenen Abmessungen des Fensters zu realisieren, ergibt sich dann automatisch der Maßstab M1 für die geraden Bereiche GB der Sollbahn SB.

Um Punkte der Istbahn IB immer dem richtigen Abschnitt der Sollbahn SB zuordnen zu können, werden Zuordnungskriterien benötigt. Vor allem an Stellen, an denen Abschnitte der Sollbahn SB weniger oder ungefähr die zweifache maximale Abweichung zwischen Sollbahn SB und Istbahn IB auseinander liegen, ist ein Zuordnungskriterium erforderlich, um anzugeben welcher Punkt der Istbahn IB zu welcher Sollbahn SB gehört. Dieses Zuordnungskriterium ist der Abstand der Punkte der Istbahn IB von der Sollbahn SB. Ein Punkt der Istbahn IB wird dem Abschnitt einer Sollbahn SB zugeordnet, zu dem er den kleinsten Abstand hat.

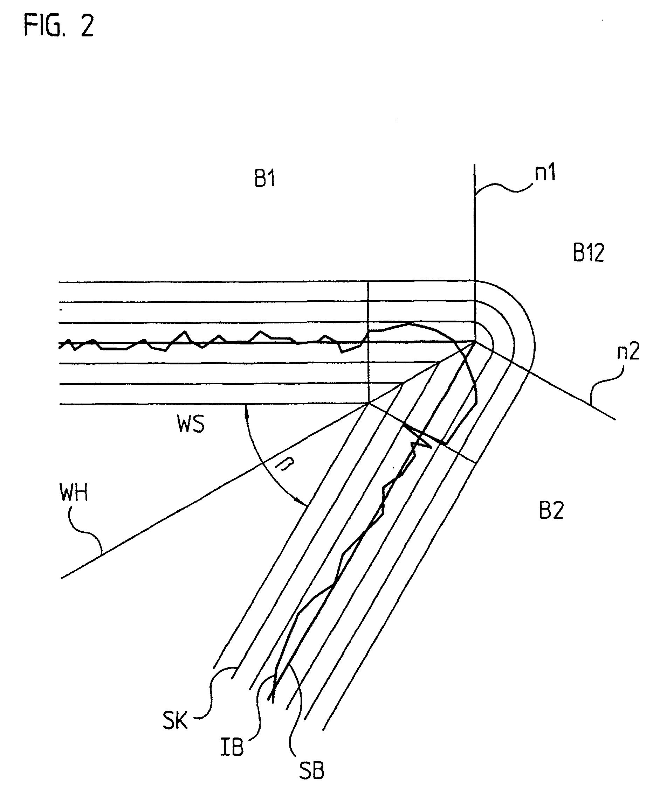

Grafisch anschaulich soll das an einem Verlauf der Sollbahn SB wie in Fig. 2 gemacht werden. Die Abschnitte B1 und B2 der Sollbahn SB bilden einen Winkel β. Um die Zuordnung für die von der Sollbahn eingeschlossenen Bahnpunkte im Winkelsegment WS zu ermitteln, wird die Winkelhalbierende WH des durch die Abschnitte B1 und B2 der Sollbahn SB eingeschlossenen Winkels β bestimmt. Diese Winkelhalbierende WH teilt den Bereich zwischen den Abschnitten B1 und B2 der Sollbahn SB in zwei Teile, wobei die Punkte der Istbahn IB, die zwischen der Winkelhalbierenden WH und einem der beiden Abschnitte B1 oder B2 der Sollbahn SB liegen dem jeweils näheren Abschnitt B1 oder B2 der Sollbahn SB zugeordnet werden.

Liegen die Punkte der Istbahn IB nicht im kleineren, durch die Abschnitte B1 und B2 der Sollbahn SB definierten Winkelsegment WS, werden im Schnittpunkt B12, wo die beiden Abschnitte B1 und B2 der Sollbahn SB aufeinandertreffen, die Normalen n1 und n2 auf beide Abschnitte B1 und B2 der Sollbahn SB in diesem Schnittpunkt B12 bestimmt. Diese Normalen n1 und n2 lassen außerhalb des kleineren Winkelsegments WS einen Winkelbereich entstehen. Die Punkte der Istbahn IB, die zwischen der Normalen n1 und dem Abschnitt B1 des Sollbahn SB liegen, werden dem Abschnitt B1 der Sollbahn SB zugeordnet. Die Punkte der Istbahn IB, die zwischen den beiden Normalen n1 und n2 im Winkelbereich liegen, werden dem Schnittpunkt B12 der Abschnitte B1 und B2 der Sollbahn SB zugeordnet. Die Punkte der Istbahn IB, die zwischen der Normalen n2 und dem Abschnitt B2 der Sollbahn SB liegen, werden dem Abschnitt B2 der Sollbahn SB zugeordnet. Auch bei komplizierteren Verläufen der Sollbahn SB bleibt der Abstand zwischen der Sollbahn SB und dem zuzuordnenden Punkt der Istbahn IB als Zuordnungskriterium entscheidend.

Weisen an einer Grenze zwischen Maßstab M1 und Maßstab M3 die beiden zu dieser Grenze benachbarten Punkte der Istbahn IB nicht gleichen Abstand von der Sollbahn SB auf oder liegt nicht zufällig ein Punkt der Istbahn IB auf dieser Grenze, weist der Verlauf der Istbahn IB einen Knick auf. Dies ist dadurch begründet, daß sich bei einem verkleinernden Maßstab M1 der Abstand zwischen Istbahn IB und Sollbahn SB schneller ändert, als bei einem Maßstab M3, der die grafische Darstellung weniger verkleinert. Für die Berechnung und grafische Darstellung der Istbahn IB ist es daher, wie bereits beschrieben, vorteilhaft an der Grenze zwischen zwei Maßstäben einen Hilfspunkt zu berechnen.

Eine weitere Ausführungsform besteht darin, daß nicht automatisch die Bereiche der Ecken EB der Sollbahn SB größer dargestellt werden als gerade Bereiche GB der Sollbahn SB, sondern daß automatisch nur die Bereiche größer dargestellt werden, die eine Differenz zwischen Sollbahn SB und Istbahn IB aufweisen, die über einem Schwellwert liegt. Dadurch werden automatisch die Bereiche vergrößert dargestellt, in denen offensichtlich Probleme bei der Bearbeitung vorliegen, weil große Abweichungen der Istbahn IB von der Sollbahn SB auftreten.

In einer weiteren Ausgestaltungsmöglichkeit werden die Skalenstriche der Skala SK mit gleichem Abstand von der Sollbahn SB an den Enden der Sollbahn SB durch einen Halbkreis miteinander verbunden. Dadurch ist es dem Benutzer möglich auch Abweichungen am Start- und Zielpunkt der Istbahn IB qualitativ zu erfassen.

**Patentansprüche**

1. Verfahren zur nichtlinearen Darstellung von Bahnkurven, insbesondere einer NC-Maschine oder eines Roboters, wobei eine Sollbahn (SB) aufgrund von gespeicherten Befehlen und eine Istbahn (IB) aufgrund der tatsächlich erfolgten Bewegungen bei Abarbeitung dieser Befehle ermittelt wird und eine grafische Darstellung erfolgt, bei der die Sollbahn (SB) und die zur Sollbahn (SB) parallele Komponente der Istbahn (IB) in einem ersten Maßstab (M1) und die zur Sollbahn (SB) senkrechte Komponente der Istbahn (IB) in einem zweiten Maßstab (M2) dargestellt wird, **dadurch gekennzeichnet, daß** an ausgewählten Stellen der Sollbahn (SB) die Sollbahn (SB) und die zur Sollbahn (SB) parallele Komponente der Istbahn (IB) in einem dritten Maßstab (M3) und die zur Sollbahn (SB) senkrechte Komponente der Istbahn (IB) in einem vierten Maßstab (M4) dargestellt wird.

2. Verfahren nach Anspruch 1, **dadurch gekennzeichnet, daß** der dritte Maßstab (M3) und vierte Maßstab (M4) identisch sind.

3. Verfahren nach Anspruch 1 oder 2, **dadurch gekennzeichnet, daß** der zweite Maßstab (M2) und dritte Maßstab (M3) identisch sind.

4. Verfahren nach einem der Ansprüche 1 bis 3, **dadurch gekennzeichnet, daß** die Stellen der Sollbahn (SB) zur Darstellung in einem dritten und vierten Maßstab (M3, M4) ausgewählt werden, an denen die Sollbahn (SB) eine Ecke (EB) aufweist und/oder an denen eine besonders große Differenz zwischen Sollbahn (SB) und Istbahn (IB) vorliegt und/oder an denen ein neuer NC-Satz abgearbeitet wird.

5. Verfahren nach einem der Ansprüche 1 bis 4, **dadurch gekennzeichnet, daß** zusätzlich die Vorschubgeschwindigkeit angezeigt wird und daß als Abszisse für die Vorschubgeschwindigkeit die Sollbahn (SB) und als Ordinate eine Senkrechte (n1, n2) auf die Sollbahn (SB) benutzt wird.

6. Verfahren nach Anspruch 5, **dadurch gekennzeichnet, daß** die Abweichung der tatsächlichen Vorschubgeschwindigkeit von der durch die gespeicherten Befehle festgelegten Vorschubgeschwindigkeit grafisch dargestellt wird.

**7.** Verfahren nach einem der Ansprüche 1 - 6, **dadurch gekennzeichnet, daß** Punkte der Istbahn (IB) dem Abschnitt (B1, B12, B2) der Sollbahn (SB) zugeordnet werden, zu dem diese Punkte den geringsten Abstand aufweisen.

**8.** Verfahren nach einem der Ansprüche 1 - 7, **dadurch gekennzeichnet, daß** an der Grenze von zwei unterschiedlichen Maßstäben (M1, M3) ein Hilfspunkt berechnet wird, falls die grafische Darstellung der Istbahn (IB) aufgrund des Maßstabswechsels an dieser Stelle einen Knick aufweist.

**9.** Verfahren nach einem der Ansprüche 1 - 8, **dadurch gekennzeichnet, daß** eine Skala (SK) mit Skalenstrichen, die zur Sollbahn (SB) einen konstanten Abstand aufweisen, dargestellt wird.

**10.** Verfahren nach einem der Ansprüche 1 - 9, **dadurch gekennzeichnet, daß** die Stellen der Sollbahn (SB), welche in einem dritten und vierten Maßstab (M3, M4) dargestellt werden, grafisch gekennzeichnet werden.

## Claims

**1.** Method of non-linear display of routes, in particular of an NC machine tool or a robot, wherein a set path (SB) is determined on the basis of stored commands and the actual path (IB) is determined on the basis of the actual movements resulting from the execution of these commands, and a graphic display follows, in which the set path (SB) and components of the actual path (IB) parallel to the set path (SB) are displayed on a first scale (M1), and the components of the actual path (IB) perpendicular to the set path (SB) are displayed on a second scale (M2), **characterised in that** at selected points of the set path (SB), the set path (SB) and the components of the actual path (IB) parallel to the set path (SB) are displayed on a third scale (M3) and the components of the actual path (IB) perpendicular to the set path (SB) are displayed on a fourth scale (M4).

**2.** Method according to Claim 1, **characterised in that** the third scale (M3) and the fourth scale (M4) are identical.

**3.** Method according to Claim 1 or 2, **characterised in that** the second scale (M2) and the third scale (M3) are identical.

**4.** Method according to one of Claims 1 to 3, **characterised in that** those points of the set path (SB) for display on a third and a fourth scale (M3, M4) are selected, at which the set path (SB) has a corner (EB) and/or at which a particularly large deviation between the set path (SB) and the actual path (IB) exists, and/or at which a new set of commands is processed.

**5.** Method according to one of Claims 1 to 4, **characterised in that** the displacement speed is additionally displayed, and that the set path (SB) is used as an abscissa for the displacement speed and a perpendicular (n1, n2) to the set path (SB) is used as an ordinate.

**6.** Method according to Claim 5, **characterised in that** the deviation of the actual displacement speed from the displacement speed defined by the stored command is displayed graphically.

**7.** Method according to one of Claims 1 - 6, **characterised in that** points of the actual path (IB) are allocated to the section (B1, B12, B2) of the set path (SB), from which these points are spaced at the shortest distance.

**8.** Method according to one of Claims 1 - 7, **characterised in that** at a border between two different scales (M1, M3) an auxiliary point is provided, should the actual path (IB) have a bend in it at this point as a result of the scale change.

**9.** Method according to one of Claims 1 - 8, **characterised in that** a graduation (SK) with graduation marks that are spaced at a constant distance from the set path (SB) is displayed.

**10.** Method according to one of Claims 1 - 9, **characterised in that** the points of the set path (SB), which are displayed on a third and a fourth scale (M3, M4), are characterised graphically.

## Revendications

**1.** Procédé de représentation non-linéaire de trajectoires, en particulier dans une machine à commande numérique ou dans un robot, une trajectoire de consigne (SB) étant déterminée sur la base d'ordres mémorisés et une trajectoire effective (IB) étant déterminée sur la base des déplacements réellement effectués lors de l'exécution de ces ordres, et une représentation graphique ayant lieu, dans laquelle la trajectoire de consigne (SB) et la composante de la trajectoire effective (IB) parallèle à la trajectoire de consigne (SB) sont représentées sous une première échelle (M1) et la composante de la trajectoire effective (IB) normale à la trajectoire de consigne (SB) est représentée sous une seconde échelle (M2), **caractérisé en ce qu'**en des points sélectionnés de la trajectoire de consigne (SB), la trajectoire de consigne (SB) et la composante de la trajectoire effective (IB) parallèle à la trajectoire de consigne (SB) sont représentées sous une troisième échelle (M3) et la composante de la trajectoire effective (IB) normale à la trajectoire de consigne (SB) est représentée sous une quatrième échelle (M4).

2. Procédé selon la revendication 1, **caractérisé en ce que** les troisième (M3) et quatrième (M4) échelles sont identiques.

3. Procédé selon la revendication 1 ou 2, **caractérisé en ce que** les deuxième (M2) et troisième (M3) échelles sont identiques.

4. Procédé selon une des revendications 1 à 3, **caractérisé en ce que** les points de la trajectoire de consigne (SB) pour le représentation sous une troisième et une quatrième échelle (M3, M4) sont sélectionnés aux emplacements où la trajectoire de consigne (SB) forme un angle (EB) et/ou où il existe une différence particulièrement grande entre la trajectoire de consigne (SB) et la trajectoire effective (IB) et/ou où un nouveau jeu de commandes numériques est exécuté.

5. Procédé selon une des revendications 1 à 4, **caractérisé en ce qu'**on affiche en plus la vitesse d'avance et **en ce qu'**on utilise comme abscisses pour la vitesse d'avance la trajectoire de consigne (SB) et comme ordonnées une normale (n1, n2) à la trajectoire de consigne (SB).

6. Procédé selon la revendication 5, **caractérisé en ce que** l'écart de la vitesse d'avance effective par rapport à la vitesse d'avance déterminée sur la base des ordres mémorisés est représenté graphiquement

7. Procédé selon une des revendications 1 à 6, **caractérisé en ce que** des points de la trajectoire effective (IB) sont associés à la portion (B1, B12, B2) de la trajectoire de consigne (SB) par rapport à laquelle lesdits points présentent la distance la plus faible.

8. Procédé selon une des revendications 1 à 7, **caractérisé en ce qu'**à la frontière de deux échelles (M1, M3) différentes, on calcule un point auxiliaire dans les cas où la représentation graphique de la trajectoire effective (IB) présente une inflexion due au changement d'échelle.

9. Procédé selon une des revendications 1 à 8, **caractérisé en ce qu'**on affiche une graduation (SK) avec des traits de graduation qui présente une distance constante par rapport à la trajectoire de consigne (SB).

10. Procédé selon une des revendications 1 à 9, **caractérisé en ce qu'**on repère graphiquement les points de la trajectoire de consigne (SB), qui sont représentés sous une troisième et une quatrième échelle (M3, M4).

FIG. 1

FIG. 2